Europäisches Patentamt

European Patent Office

Office européen des brevets

(11) Publication number: **0 043 193**
**B1**

## EUROPEAN PATENT SPECIFICATION

(45) Date of publication of patent specification: **10.04.85**

(51) Int. Cl.⁴: **F 16 K 1/22, F 16 K 47/02**

(21) Application number: **81302540.0**

(22) Date of filing: **09.06.81**

(54) **Valve.**

(30) Priority: **01.07.80 FI 802109**

(43) Date of publication of application:
**06.01.82 Bulletin 82/01**

(45) Publication of the grant of the patent:
**10.04.85 Bulletin 85/15**

(84) Designated Contracting States:
**AT DE FR GB IT NL SE**

(56) References cited:
**EP-A-0 013 601
DE-A-2 045 639
DE-A-2 352 370
DE-A-2 359 717
DE-A-2 446 025
FI-A- 54 536
FR-A-1 050 164
US-A-3 960 177**

(73) Proprietor: **BEY, ROGER**
**19, Rue des Rossignols**
**F-68110 Illzach (FR)**

(72) Inventor: **BEY, ROGER**
**19, Rue des Rossignols**
**F-68110 Illzach (FR)**

(74) Representative: **Kerr, Simonne June et al**
**European Patent Attorney POTTS, KERR & CO.**
**13 High Street**
**Windsor Berkshire SL4 1LD (GB)**

Courier Press, Leamington Spa, England.

## Description

The present invention concerns a butterfly valve or a ball calotte valve comprising a valve body with a flow passage therethrough into which a closure member is rotatably fitted on a pivot shaft. These valves are generally known, see e.g. FI—A—54.5.36.

In the valve disclosed in DE—A—2352370 the controlling or adjusting range is wider than in the valve disclosed in DE—A—2359717 because of the apertures of various sizes in the plug. At small opening angles, the flow goes through the small aperture, when the opening angle increases, the number and the size of the apertures also increases. The attenuator is constant, a single resistance having a small attenuating power at a small flow and the power increases only when the opening angle, that is when the flow is sufficient. The constant attenuator restricts the capacity of the valve at full opening, or correspondingly if its apertures are sufficiently big. Its attenuating power is low at a small opening and its size is big and its price high.

The object of the present invention is to produce flow attenuation in butterfly valves or ball calotte valves.

The object of the present invention is obtained by providing at least one attenuator plate which is arranged parallel to the plane of the sealing surface of the closure member and spaced apart from one side of the closure member, the attenuator plate being provided with a plurality of apertures, the or each attenator plate and the closure member being situated within the space described by the peripheral sealing edge of the closure member upon rotation. A particular embodiment of the invention is set out in claim 2.

The invention will be described further, by way of example, with reference to the accompanying drawings, in which:—

Fig. 1 is a section of a butterfly valve with flow attenuator seen in the longitudinal direction of the pivoting shaft of the closure member with the closure member partly open.

Fig. 2 is a corresponding section with the closure member in the closed position.

Fig. 3 is section of a valve similar to Fig. 1 but provided with flow attenuator and a ball calotte closure member shown partly open; and

Fig. 4 is a corresponding section with the closure member in the closed position.

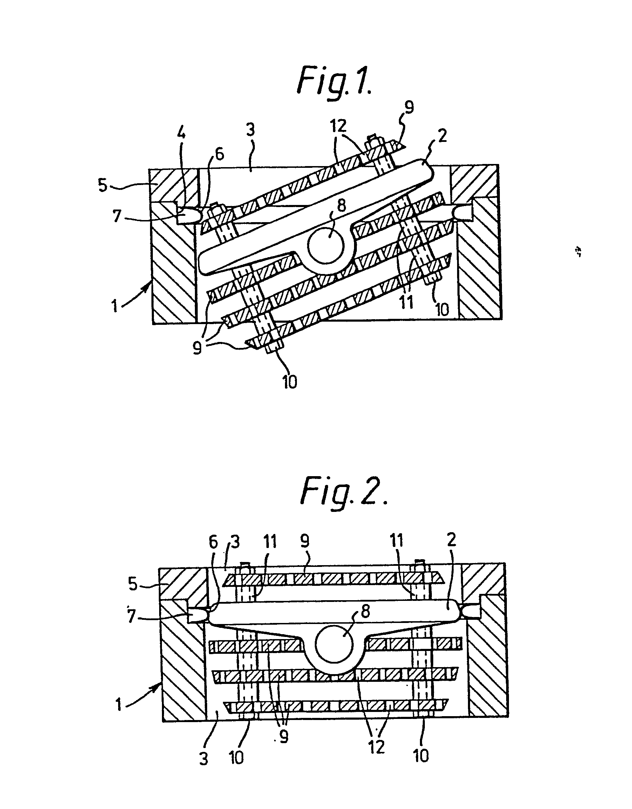

The butterfly valve shown in Figs. 1 and 2 comprises a valve body 1 having a circular cross-section flow passage 3, a rotatable closure member or disc 2 having a stem or pivot shaft 8 being fitted into the valve body 1. The pivot shaft 8 is fitted in the centre of the flow passage 3 and is attached by bearings on both sides of the valve body 1. The disc 2 is fitted on the side of the shaft 8 as shown in Figs. 1 and 2. An annular groove 4 is formed in the wall of the flow passage 3 at one end of the valve body 1, the groove 4 being near to the line of disc 2. A seal 6, which may be of U-shaped cross-section, is fitted into the annular groove 4, the U-shaped seal being positioned to open towards the base 7 of the groove 4; the other edge of the groove 4 is formed by a support ring 5 which is fitted thereinto as shown in Figs. 1 and 2. Such a butterfly valve has been disclosed in Finnish Patent FI—A—54536.

A punched attenuator plate 9 is fitted on the upstream flow side of the disc 2 and three punched plates 9 are arranged on the downstream flow side of the disc 2. The number of plates 9 on both sides of the disc 2 can be varied. All the plates 9 are arranged in relation to the pivot shaft 8 of the disc 2 so as to form a constant radius of revolution. As shown in Figs. 1 and 2 the plates 9 are in parallel spaced apart relationship with the disc 2. Holes are provided in the disc 2 and the plates 9 through which fastening bolts 10 are located. The plates 9 and the disc 2 are held spaced apart by means such as bushings 11.

The plates 9 do not have to be mutually parallel nor do they have to be parallel with the disc 2, moreover the plates do not have to be plane, they can be curved for example. The plates can be formed of rods or wires to constitute a net. In the embodiment shown in Figs. 1 and 2 the plates 9 are perforated with a plurality of holes 12 over their entire area. When more than one plate 9 is provided in the valve, it is advantageous that the holes 12 are not situated face to face in the juxtaposed plates 9. Suitably, the size of the holes 12 increases with the distance of the plate 9 from the disc 2.

When the valve shown in Figs. 1 and 2 is opened, the attenuating effect of the plates 9 is high at the beginning, but the more the valve is opened, the smaller is the attenuating effect of the plates 9, for then the proportion of the fluid flowing past the plates 9 increases. Whilst being in the open position, the plates 9 no longer attenuate but are in the direction of the flow allowing the valve to function almost to full capacity.

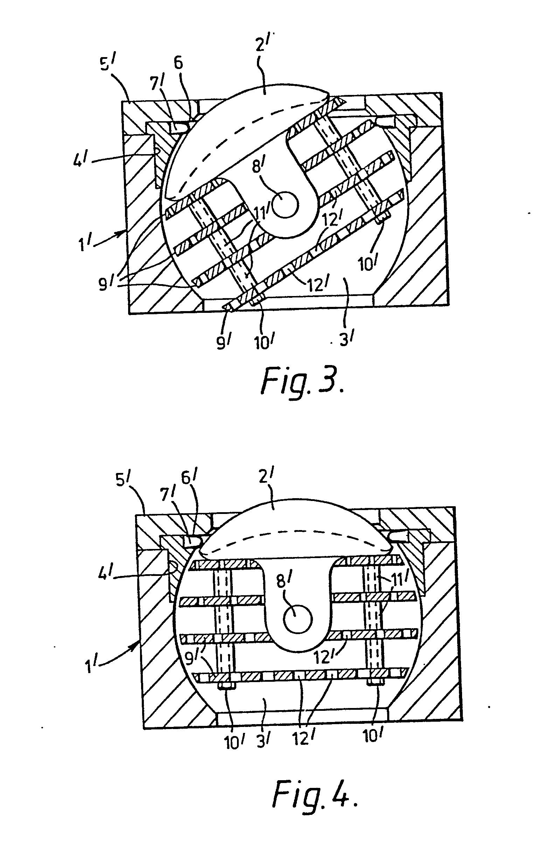

Figs. 3 and 4 show an alternative embodiment of valve construction in which the closure member 2' of the valve 1' is a ball calotte and the attenuator plates 9' are situated only on one side of the closure member. In this embodiment the same reference numbers as used as in Figs. 1 and 2 but with apostrophes. This valve operates in the same manner as the one shown in Figs. 1 and 2.

## Claims

1. A butterfly valve or a ball calotte valve comprising a valve body (1, 1') with a flow passage (3, 3') therethrough, into which a closure member (2, 2') is rotatably fitted on a pivot shaft (8, 8'), characterized in that at least one attenuator plate (9, 9') is arranged parallel to the plane of the sealing surface of the closure member (2, 2') and spaced apart from one side of the closure member (2, 2'), the attenuator plate (9, 9') being provided with a plurality of apertures (12, 12'), the or each attenuator plate (9, 9') and the closure member (2, 2') being situated within the space described by the peripheral sealing edge of the closure member upon rotation.

2. A valve according to claim 1, characterized in that the attenuator plates (9, 9') are held in spaced relationship between themselves and the closure member (2, 2') by means of bushings (11, 11') and bolts (10, 10') passing therethrough.

**Patentansprüche**

1. Drosselklappen- oder Kalottenventil, bestehend aus einem Ventilgehäuse (1, 1') mit einer durchgehenden Durchflußöffnung (3, 3'), in der drehbar ein Verschlußglied (2, 2') auf einer Schwenkwelle (8, 8') gelagert ist, dadurch gekennzeichnet, daß zumindest eine mit mehreren Öffnungen (12, 12') versehene Dämpfungsplatte (9, 9') parallel zur Ebene der Dichtfläche des Verschlußgliedes (2, 2') im Abstand von einer Seite desselben angeordnet ist, wobei die oder jede Dämpfungsplatte (9, 9') und das Verschlußglied (2, 2') innerhalb des vom umfänglichen Dichtrand des Verschlußgliedes bei Drehung umschriebenen Raumes angeordnet ist.

2. Ventil nach Anspruch 1, dadurch gekennzeichnet, daß die Dämpfungsplatten (9, 9') mit Hilfe von Distanzhülsen (11, 11') und durch diese verlaufende Bolzen (10, 10') in gegenseitigem Abstand sowie im Abstand von dem Verschlußglied (2, 2') gehalten sind.

**Revendications**

1. Une soupape à papillon ou soupape à clapet sphérique comprenant un corps de soupape (1, 1') avec un passage d'écoulement (3, 3') le traversant, dans lequel un élément de fermeture (2, 2') est monté de façon à pivoter sur un axe de pivotement (8, 8'), caractérisée en ce qu'au moins une plaque d'atténuation (9, 9') est disposée parallèlement au plan de la surface de joint de l'élément de fermeture (2, 2') et à une certaine distance du côté de l'élément de fermeture (2, 2'), la plaque d'atténuation (9, 9') étant pourvue d'une pluralité d'ouvertures (12, 12'), la ou les plaques d'atténuation (9, 9') et l'élément de fermeture (2, 2') étant situés dans l'espace délimité par le bord du joint périphérique de l'élément de fermeture pendant la rotation.

2. Une soupape conforme à la revendication 1, caractérisée en ce que les plaques d'atténuation (9, 9') sont maintenues espacées les unes des autres et vis-àvis de l'élément de fermeture (2, 2') par des douilles (11, 11') et des boulons (10, 10') qui les traversent.

# Fig.1.

# Fig.2.

Fig. 3.

Fig. 4.